# EUROPÄISCHE PATENTSCHRIFT

(11) **EP 0 764 773 B1**
(45) Veröffentlichungstag und Bekanntmachung des Hinweises auf die Patenterteilung: **18.08.1999**
(21) Anmeldenummer: 96890143.9
(22) Anmeldetag: 16.09.1996
(51) Int. Cl.: F02B 17/00, F02B 31/08, F02B 31/06

(54) **Viertakt-Brennkraftmaschine**
Four stroke internal combustion engine
Moteur à combustion à quatre temps

(30) Priorität: 22.09.1995 AT 157695
(43) Veröffentlichungstag der Anmeldung: 26.03.1997
(73) Patentinhaber: AVL List GmbH, 8020 Graz (AT)
(72) Erfinder: Fraidl, Günter, 8054 Pirka (AT); Piock, Walter, 8151 Hitzendorf (AT); Wirth, Martin, 8151 Hitzendorf (AT)
(74) Vertreter: Babeluk, Michael, Dipl.-Ing. Mag., Patentanwälte Babeluk - Krause

(56) Entgegenhaltungen:
- EP-A- 0 594 462
- EP-A- 0 610 678
- DE-A- 4 437 279
- US-A- 5 323 753

## Beschreibung

Die Erfindung betrifft eine Viertakt-Brennkraftmaschine mit dachförmigem Brennraum und mindestens zwei Einlaßventilen pro Zylinder, mit mindestens zwei zu den Einlaßventilen führenden Einlaßkanälen, von welchen ein erster Einlaßkanal ungedrosselt ausgeführt ist und ein zweiter Einlaßkanal eine in Abhängigkeit von der Motorlast betätigbare Drosseleinrichtung aufweist, wobei - in Richtung der Kurbelwellenachse betrachtet - die Mittellinie des ersten Einlaßkanales unmittelbar am Einlaßventil mit einer von der Zylinderachse und der Kurbelwellenachse aufgespannten Längsebene einen größeren Winkel einschließt als eine Mittellinie des zweiten Einlaßkanales, und wobei - in Richtung der Zylinderachse gesehen - am Brennraumeintritt die Mittellinie des ersten Einlaßkanales mit einer die Zylinderachse und die Mitte des Einlaßventils des ersten Einlaßkanales einschließenden ersten Ebene einen größeren Winkel einschließt als eine Mittellinie des zweiten Einlaßkanales mit einer die Zylinderachse und die Mitte eines Einlaßventiles des zweiten Einlaßkanales einschließenden zweiten Ebene, sowie mit einem in einen der Einlaßkanäle mündenden Kraftstoffeinspritzventil und einer zentral im Brennraum angeordneten Zündkerze.

Ständig steigende Anforderungen an den Kraftstoffverbrauch und die Reduktion der Abgasemissionen, insbesondere der Kohlenwasserstoffe und der Stickoxide, erfordern den Einsatz neuer Technologien im Bereich der Verbrennungskraftmaschinen.

Ein wesentlicher Grund für den gegenüber z.B. Dieselmotoren höheren spezifischen Kraftstoffverbrauch einer fremdgezündeten Brennkraftmaschine liegt in der Betriebsweise mit vorgemischtem homogenen Kraftstoff-Luftgemisch. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 25 % geschätzt werden. Ein Teil dieses Verbesserungspotentials kann genutzt werden, wenn im Teillastbereich eine Verringerung der Drosselung möglich wird. Bei gegebener Kraftstoffmenge ist dies jedoch nur durch eine Abmagerung des Gemisches oder durch Rückführung von Abgas (AGR) möglich. Es sind also Maßnahmen erforderlich, die die Abmagerungsfähigkeit bzw. AGR-Verträglichkeit des Motors erhöhen bei gleichzeitiger Beibehaltung oder Verringerung der Emissionswerte.

Eine Reduktion der unverbrannten Kohlenwasserstoffe bei insgesamt überstöchiometrischer Verbrennung wird durch eine Gemischschichtung begünstigt, die zu einer lokalen Anfettung des Gemisches führt. Die Verbrennung läuft dann lokal in einem gegenüber dem Gesamtluftverhältnis fetteren Gemisch ab. die mit der annähernd stöchiometrischen Verbrennung einhergehende erhöhte Stickoxidbildung ist auf die maximalen Verbrennungstemperaturen (thermische Stickoxidbildung) zurückzuführen. Die wirkungsvollste Strategie zur Reduktion der Stickoxide besteht in einer Verlangsamung des Verbrennungsvorganges durch Abgasrückführung.

Eine Brennkraftmaschine mit mindestens zwei Einlaßventilen bietet die Möglichkeit, dem Brennraum über getrennte Einlaßkanäle unterschiedliche Gemischzusammensetzungen zuzuführen. Die Strömung im Zylinderraum kann mit Hilfe der Gestaltung der Einlaßorgane des Motors derart beeinflußt werden, daß sich zum Zündzeitpunkt ein in der gewünschten Weise geschichtetes Gemisch im Zylinder befindet. Hierbei ist es besonders vorteilhaft, wenn sich der fettere Gemischanteil in Zylindermitte im Bereich einer zentral angeordneten Zündkerze befindet, während zur Zylinderwand hin entweder eine Abmagerung des Gemisches oder eine Zunahme der Abgaskonzentration vorzufinden ist.

Eine derartige einlaßgenerierte Gemischschichtung muß durch die Hauptströmungsstrukturen im Zylinderraum der Brennkraftmaschine erzeugt und stabilisiert werden, um selbst in Anwesenheit der sehr hohen Turbulenzgrade der Motorinnenströmung den Kompressionsvorgang zwischen dem Schließen der Einlaßventile und der Zündung überdauern zu können. Als Hauptströmungsformen kommen hier die Wirbelbewegungen Drall und Tumble in Betracht. Bei der Drallströmung rotiert die Zylinderladung aufgrund der Einlaßkanalgestaltung um die Zylinderachse, während bei einer Tumbleströmung eine Rotation um eine zur Kurbelwelle parallele Achse zu beobachten ist.

Grundsätzlich bietet die Drallströmung die besseren Voraussetzungen zur Erhaltung einer Gemisch-Schichtung während der Kompression, da sich der runde Zylinderquerschnitt senkrecht zur Zylinderachse während der Kompression nicht ändert. Ein Tumblewirbel dagegen hat wesentlich eher das Bestreben, während der Kompression durch die zunehmende Abflachung des für seine Rotation zur Verfügung stehenden Querschnittes senkrecht zur Kurbelwellenachse und die daraus resultierende Verformung des Wirbels durch Scherwirkung in ungeordnete Turbulenzstrukturen zu zerfallen. Tumbleströmungen werden daher vorzugsweise eingesetzt, wenn eine allgemeine Beschleunigung der Verbrennung durch Erhöhung des Turbulenzniveaus im gesamten Brennraum angestrebt wird.

Aus der EP 0 537 745 Al ist eine Brennkraftmaschine der eingangs genannten Art bekannt, bei welcher ein erster Haupteinlaßkanal in welchen die Kraftstoffeinspritzung erfolgt, eine Drallströmung und ein zweiter, bei hoher Motorlast zuschaltbarer Einlaßkanal eine Strömung mit Tumblecharakteristik erzeugt. Ziel ist hier jedoch nicht die Schichtung, sondern eine reine Erhöhung der Verbrennungsgeschwindigkeit und die Verbesserung der Zündbedingungen durch die mit der Drallströmung einhergehende erhöhte Ladungsbewegung und des oben genannten verbrennungsbeschleunigenden Effektes der Tumbleströmung.

Es sind zahlreiche Konstruktionen zur Erzeugung einer Ladungsschichtung bekannt. So ist aus der EP 0 594 462 A1 oder EP 0 390 589 A2 eine Brennkraftmaschine bekannt, bei der durch Einspritzung des Kraftstoffes in einen von zwei Einlaßkanälen auf Basis einer Tumbleströmung das Ziel verfolgt wird, eine Schichtung des Gemisches im Zylinderraum zu erreichen, die einen Gradienten des Luftverhältnisses in Richtung der Kurbelwellenachse aufweist. Bei derartiger Aufteilung der Einlaßströmung in zwei Teilströme unterschiedlicher Gemischzusammensetzung ergibt sich ein fetter Bereich auf einer Zylinderseite und ein entsprechend magerer Bereich auf der gegenüberliegenden Zylinderseite, während an der zentral angeordneten Zündkerze ein auf die Gesamtladung bezogen mittleres Luftverhältnis mit starken zyklischen Schwankungen vorliegt. Die dadurch entstehende asymmetrische Flammenausbreitung bietet keine optimalen Bedingungen für die Zündung und eine thermodynamisch optimale Verbrennung.

Durch Aufteilung des Einlaßstromes in drei Teilströme wird in der DE 42 33 640 A1, der EP 0 558 081 A1 und der EP 0 558 073 A1 eine bessere Schichtung auf Tumblebasis angestrebt. Dies wird entweder durch Verwendung von drei Einlaßventilen mit getrennten Kanälen oder durch Einsatz von Trennwänden im gemeinsamen Einlaßkanal bei zwei Einlaßventilen erreicht. Durch Einbringung des Kraftstoffes nur in den mittleren Teilstrom wird dabei eine Anfettung des Gemisches in Zylindermitte erzielt, wobei diese Schichtung jedoch keine radiale Schichtung darstellt, sondern aus ebenen Schichten senkrecht zur Kurbelwellenachse besteht. Ein wesentliches Problem bei der Aufrechterhaltung einer solchen Dreifachschichtung während der Kompressionsphase besteht in der Tatsache, daß eine Tumblebewegung während der Kompression teilweise in zwei nebeneinander gegensinnig rotierende Wirbel übergeht deren Drehachse senkrecht zur Kurbelwellenachse steht. Diese auch als Omega-Tumble bezeichneten Wirbelbewegungen tragen starkt zu einer Vermischung einer solchen Dreifachschichtung bei.

In der EP 0 449 240 A1 wird eine Brennkraftmaschine mit drei Einlaßventilen gezeigt, von denen zwei Ventile in konventioneller Anordnung nur zur Luftansaugung dienen und durch Abschaltung eines Ventiles eine Drallströmung erzeugt werden kann. Ein drittes, das Gemisch führende Einlaßventil ist zentral im Brennraum angeordnet und mit einem drallerzeugenden Spiraleinlaßkanal verbunden. Dadurch soll eine radiale Gemischschichtung erreicht werden, allerdings mit Hilfe einer unkonventionellen, vom heutigen Serienstandard stark abweichenden Ventilkonfiguration. Die Möglichkeit einer zentral angeordneten Zündkerze ist nicht gegeben.

Aufgabe der Erfindung ist es, bei einer Brennkraftmaschine der eingangs genannten Art eine stabile radiale Gemischschichtung zu realisieren, deren Ausprägung mit der Motorlast variiert werden kann.

Erfindungsgemäß wird dies dadurch erreicht, daß das Kraftstoffeinspritzventil im drosselbaren zweiten Einlaßkanal angeordnet ist und die Drosseleinrichtung im voll gedrosselten Zustand einen definierten Mindestdurchfluß zwischen etwa 5 % und etwa 20 %, vorzugsweise etwa 10 % des Maximaldurchflusses erzeugt, und daß - in Richtung der Kurbelwellenachse betrachtet - die Mittellinie des ersten Einlaßkanales im Einlaßventilbereich einen größeren Krümmungsradius aufweist als die Mittelline des zweiten Einlaßkanales. Der erste Einlaßkanal ist dabei als sogenannter Tangentialkanal ausgeführt. Der Kanal ist mit nur geringer Krümmung stark gegenüber der Ventilachse geneigt und erzeugt eine tangential auf die Zylinderwand treffende Strömung, die im Zylinder zur Ausbildung einer starken Drallbewegung führt. Ein zweiter Einlaßkanal ist als sogenannter Neutralkanal ausgeführt. Dieser Kanal weist eine gegenüber dem Tangentialkanal größere Krümmung und eine geringere Neigung gegenüber der Ventilachse auf. Er erzeugt eine etwa auf die Zylindermitte gerichtete Einströmung, die weder eine ausgeprägte Drallbewegung noch eine Tumblebewegung hervorruft. Die Einspritzung des Kraftstoffes erfolgt ausschließlich in diesen Neutralkanal. Die Drosseleinrichtung im Neutralkanal dient dazu, im unteren Teillastbereich des Motorkennfeldes einen verstärkten Schichtungseffekt durch Drosselung zu erzielen. Werden für die Kraftstoffeinbringung luftunterstützte Einspritzdüsen verwendet, so ist auch die von der Luftunterstützung eingebrachte Luftmenge durch entsprechend verstärkte Drosselung des Hauptluftstromes des Neutralkanals zu berücksichtigen.

Durch die Drosselung des gemischführenden Neutralkanales wird erreicht, daß die Einströmung der Ladung aus diesem Kanal mit geringerem Impuls in den Zylinderraum eintritt als die vom Tangentialkanal zugeführte Luft. Das Gesamtströmungsfeld im Zylinderraum wird so von dem ungedrosselten, reine Luft bzw. Luft und rückgeführtes Abgas führenden Tangentialkanal dominiert. Zusätzlich erfolgt durch die Reduzierung der Luftmenge, die den Neutralkanal durchströmt, eine Anfettung des dort entstehenden Gemisches, d.h. die Differenz der Gemischzusammensetzung der Strömungen beider Kanäle wird weiter erhöht. Damit werden die Voraussetzung verbessert, auch nach dem Kompressionsvorgang, der immer mit einer fortschreitenden turbulenten Vermischung der beiden Teilströme verbunden ist, noch eine ausreichende Schichtung des Kraftstoff-Luftgemisches vorzufinden. Die Stabilisierung der fetteren Gemischanteile in Zylindermitte wird dabei durch die Drallströmung unterstützt.

Die erzielbare Schichtung des Kraftstoff-Luftgemisches steht dabei in direktem Zusammenhang mit der möglichen Entdrosselung des Motors bei Teillast.

Bei Motoren mit zwei Einlaßventilen wird bei erhöhter Last der zuvor gedrosselte Neutralkanal freigegeben, sodaß der Neutralund der Tangentialstrom mit gleichem Impuls einströmen. Dies führt unter Beibehaltung eines Restdralles zu einer stärkeren Homogenisierung des Gemisches.

Die Drosseleinrichtung kann als Drosselklappe oder als Schieber ausgebildet sein. Im Fall der Drosselklappe wird der Mindestdurchfluß durch einen über ihren Umfang konstant breiten Ringspalt zwischen Drosselklappe und Kanalwand realisiert, dessen Querschnittsfläche zwischen etwa 5 % bis etwa 20 % des Kanalquerschnittes beträgt. Im Falle eines Schiebers, welcher ein Flachschieber oder Drehschieber sein kann, ist zumindest eine Öffnung, vorzugsweise aber mehrere, gleichmäßig verteilte Öffnungen auf der Schieberfläche vorgesehen.

Die Drosseleinrichtung kann gemäß einer anderen Ausführungsvariante auch als Membranventil ausgebildet sein.

In einer bevorzugten Ausführungsvariante ist vorgesehen, daß die Drosseleinrichtung durch eine variable Einlaßventilsteuerung gebildet ist, wobei der Mindestdurchfluß durch eine gesteuerte Reduktion des Ventilhubes und/oder Veränderung der Ventilöffnungszeit realisiert ist.

Wird die Entdrosselung des Motors nicht zur Abmagerung, sondern zur erhöhten Zufuhr von rückgeführtem Abgas bei ansonsten stöchometrischer Mischung genutzt, so ist es vorteilhaft, wenn zumindest die kraftstoffventillosen Einlaßkanäle mit einer Abgasrückführleitung verbindbar sind.

Die Drosselung des gemischführenden Einlaßkanals zeigt außerdem einen deutlichen Vorteil im instationären Betriebsverhalten des Motors. Normalerweise führt eine plötzliche Lastzunahme zu einem kurzzeitigen Abmagern des Kraftstoff-Luftgemisches aufgrund der vom Saugrohrdruck abhängigen Wandfilmbildung. Bei Teillast und niedrigem Saugrohrdruck bildet sich ein geringerer Wandfilm als bei höherer Last mit entsprechend erhöhtem Saugrohrdruck, sodaß sich bei Lasterhöhung zuerst ein größerer Wandfilm aufbaut. Bei plötzlicher Lastrücknahme stellt sich entsprechend durch verzögerten Abbau des Wandfilms eine kurzzeitige Überfettung des Gemisches ein. Bei einer Drosselung des gemischführenden Kanals bildet sich nun auch bei Teillast aufgrund des geringeren Unterdruckes und Massenstromes ein stärkerer Wandfilm zwischen Einspritzorgan und Einlaßventil, sodaß bei plötzlicher Lastanhebung mit gleichzeitiger Entdrosselung des gemischführenden Kanals die verzögerte Anpassung des Wandfilms an die veränderten Druckund Strömungsverhältnisse abgeschwächt auftritt, was zu einer besseren Konstanthaltung des Luftverhältnisses im instationären Betrieb führt.

In einer Ausgestaltung der Erfindung sind drei Einlaßventile vorgesehen, wobei der zweite Einlaßkanal mit zwei benachbarten Einlaßventilen in Verbindung steht. Der gemeinsame zweite Einläßkanal führt dabei zu einem seitlichen und einem mittleren Einlaßventil, wobei der zweite Einlaßkanal entsprechend der zweiventiligen Ausführung bis zu einem definierten Mindestdruchfluß gedrosselt werden kann. Der Kraftstoff wird ausschließlich in diesen zweiten Einlaßkanal eingespritzt.

In einer weiteren Ausgestaltung der Erfindung ist es vorteilhaft, wenn drei Einlaßventile und zusätzlich zum ersten und zweiten Einlaßkanal ein dritter Einlaßkanal vorgesehen ist, wobei jeder der - in Richtung der Zylinderachse betrachtet - nebeneinander angeordneten Einlaßkanäle bis zum Einlaßventil getrennt geführt und der zweite Einlaßkanal mittig angeordnet ist, und vorzugsweise im dritten Einlaßkanal eine Abschalteinrichtung vorgesehen ist. Der dritte Einlaßkanal ist dabei wie der erste Einlaßkanal als Tangentialkanal mit reiner Luftführung ausgeführt und wird durch die Abschaltvorrichtung nur im oberen Teillastbereich und bei Vollast geöffnet. Die beiden Tangentialkanäle erzeugen zusammen eine Tumblebewegung im Zylinderraum, die mit der neutralen Einströmung des gemischführenden mittleren zweiten Einlaßkanals zusammentrifft, was zu erhöhter Verwirbelung und Vermischung der einzelnen Teilströme führt. Dies unterstützt die bei hohen Lasten notwendige Homogenisierung des Gemisches, auch wenn weiterhin nur in einen Ansaugkanal eingespritzt wird.

Die Erfindung wird anhand der Figuren näher erläutert.

Es zeigen
- Fig. 1: einen Querschnitt der erfindungsgemäßen Brennkraftmaschine in Richtung der Kurbelwellenachse,
- Fig. 2: eine Ansicht dieser Brennkraftmaschine in Richtung der Zylinderachse,
- Fig. 3 bis 7: andere erfindungsgemäße Ausführungsvarianten,
- Fig. 8: ein Ventilhub-Kurbelwinkeldiagramm,
- Fig. 9 und 10: weitere Ausführungsbeispiele eines erfindungsgemäßen Einlaßsystems.

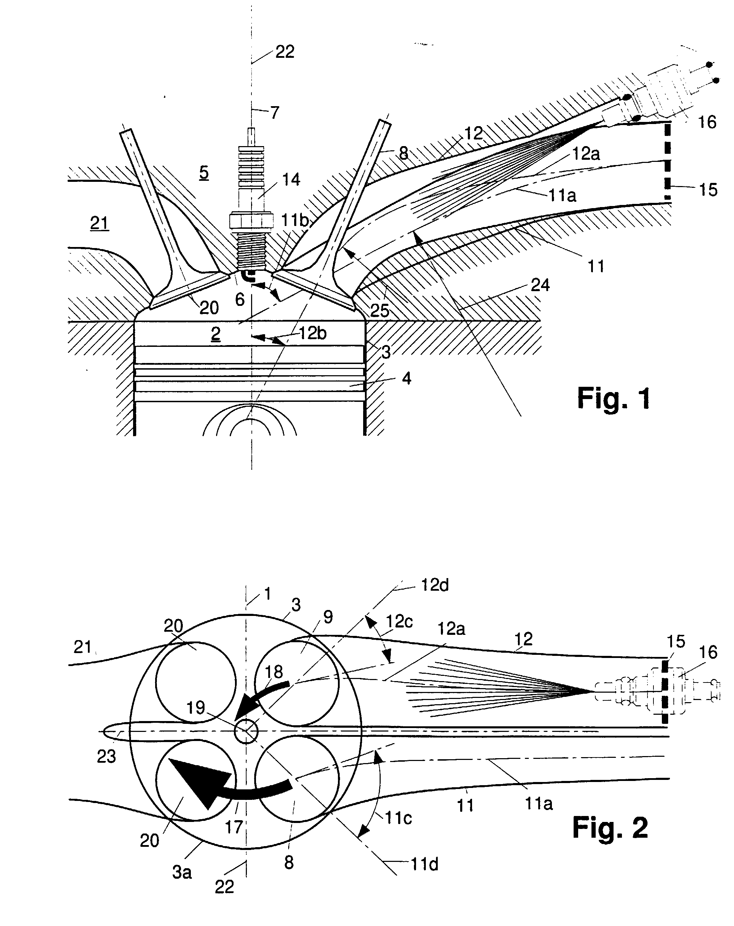

Fig. 1 zeigt einen Querschnitt durch die erfindungsgemäße Brennkraftmaschine in Richtung der Kurbelwellenachse 1 gesehen. Der Brennraum 2 wird durch einen in einem Zylinder 3 hin und her gehenden Kolben 4 und der durch den Zylinderkopf 5 gebildeten dachförmigen Brennraumdecke 6 gebildet. In den Brennraum mündet über geneigt zur Zylinderachse 7 angeordnete Einlaßventile 8 und 9 9 ein jeweils bis zu den Einlaßventilen 8 und 9 9 getrennt geführter erster und zweiter Einlaßkanal 11 und 12. Der erste Einlaßkanal 11 ist dabei als Tangential- und der zweite Einlaßkanal 12 als Neutralkanal ausgebildet. Mit 14 ist eine zentrale Zündkerze bezeichnet.

Stromabwärts eines im zweiten Einlaßkanal 12 angeordneten Drosselorgans 15 mündet eine Kraftstoffeinspritzeinrichtung 16 in den zweiten Einlaßkanal 12. Über das Drosselorgan 15 kann in Abhängigkeit von der Motorlast der Volumenstrom bis auf einen definierten Mindestdurchfluß zwischen 5 % und 20 % des Maximaldurchflusses reduziert werden.

Wie in der in Fig. 2 gezeigten Ansicht in Richtung der Zylinderachse 7 ersichtlich ist, erzeugt der als Tangentialkanal ausgebildete erste Einlaßkanal 11 durch seine Orientierung zur Zylinderwand 3a eine durch den Pfeil 17 angedeutete Strömung, die aufgrund ihres hohen Impulses zur Ausbildung einer Drallbewegung um die Zylinderachse 7 führt. Der als Neutralkanal ausgebildete zweite Einlaßkanal 12, in welchem die Kraftstoffeinspritzeinrichtung 16 angeordnet ist, erzeugt aufgrund der Drosselung durch das Drosselorgan 15 eine durch den Pfeil 18 angedeutete Strömung mit geringem Impuls, die durch die Orientierung des zweiten Einlaßkanals 12 auf den mittleren Zylinderbereich 19 gerichtet ist.

Mit 20 sind bezüglich der durch die Kurbelwellenachse 1 und die Zylinderachse 7 aufgespannten Längsmittelebene 22 den Einlaßventilen 8 und 9 gegenüberliegende, mit dem Auslaßsystem 21 in Verbindung stehende Auslaßventile bezeichnet.

Die Mittellinie 11a des ersten Einlaßkanales 11 schließt unmittelbar am Einlaßventil 8 mit der Längsebene 22 einen größeren Winkel llb ein als die Mittellinie 12a des zweiten Einlaßkanales 12. Der Winkel zwischen der Mittellinie 12a und der Längsebene 22 ist mit 12b bezeichnet. Weiters schließt die Mittellinie 11a des ersten Einlaßkanales 11 im Bereich des Einlaßventiles 8 mit einer die Zylinderachse 7 und die Einlaßventilmitte einschließenden Ebene 11d einen größeren Winkel 11c ein als die Mittellinie 12a des zweiten Einlaßkanales 12, wobei mit 12c der Winkel zwischen der entsprechenden zweiten Ebene 12d und der Mittellinie 12a bezeichnet ist. Weiters weist die Mittellinie lla des ersten Einlaßkanales 11 im Bereich des Einlaßventiles 8 einen größeren Krümmungsradius 24 auf als die Mittellinie 12a des zweiten Einlaßkanales 12 im Bereich des Einlaßventiles 9. Der entsprechende Krümmungsradius der Mittellinie 12a ist mit 25 bezeichnet.

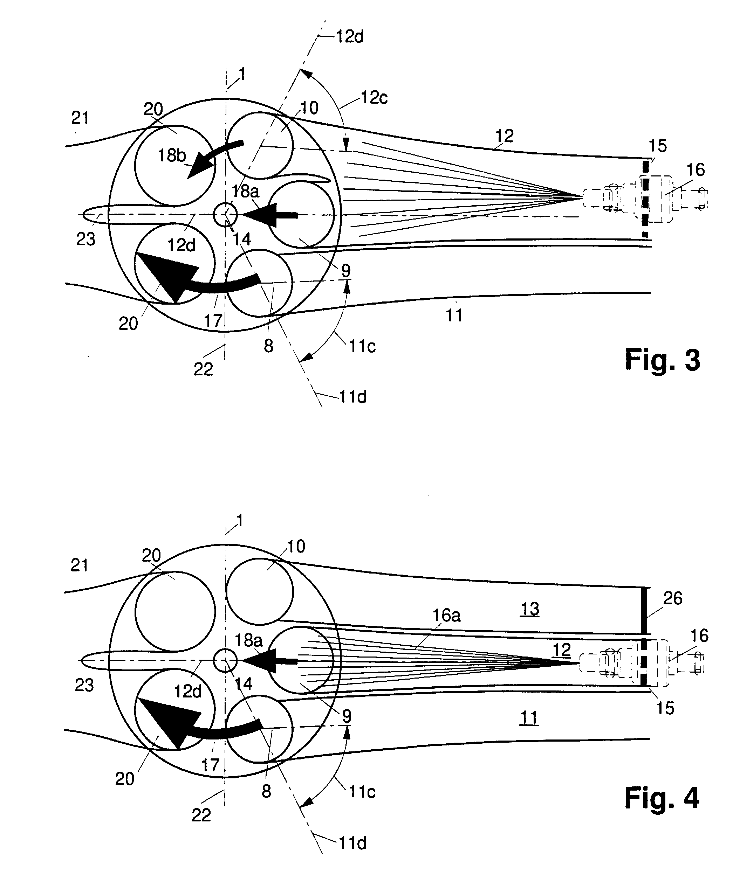

Fig. 3 zeigt eine entsprechende Ansicht für eine Brennkraftmaschine mit drei Einlaßventilen 8, 9 und 10, wobei der als Tangentialkanal ausgeführte erste Einlaßkanal 11 mit einem äußeren Einlaßventil 8 in Verbindung steht und der als Neutralkanal ausgeführte zweite Einlaßkanal 12 mit den beiden übrigen Ventilen 9 und 10 verbunden ist, wobei die durch die Pfeile 17, 18a und 18b angedeutete Einlaßströmung ähnlich ist wie der in Fig. 2 gezeigten Ausführung mit zwei Einlaßventilen.

Fig. 4 zeigt eine weitere Ausführung mit drei Einlaßventilen 8, 9 und 10, die mit jeweils einem ersten Einlaßkanal 11, einem zweiten Einlaßkanal 12 und einem dritten Einlaßkanal 13 in Verbindung stehen. Die beiden äußeren Ventile 8 und 10 sind dabei mit jeweils einem bezüglich einer die Zylinderachse 7 beinhaltende Normalebene 23 auf die Kurbelwellenachse 1 etwa symmetrisch angeordneten Tangentialkanal, nämlich dem ersten Einlaßkanal 11 und dem dritten Einlaßkanal 13, verbunden, wobei der dritte Einlaßkanal 13 mit einer Abschaltvorrichtung 26 ausgestattet ist, die eine Freigabe dieses dritten Einlaßkanales 13 nur bei oberer Teillast und Vollast ermöglicht. Das mittlere Einlaßventil 9 ist mit dem als Neutralkanal ausgeführten zweiten Einlaßkanal 12 verbunden, in welchen von der Kraftstoffeinspritzeinrichtung 16 der Kraftstoff eingespritzt wird, wie durch die mit 16a bezeichneten Kraftstoffstrahlen angedeutet ist. Der Kraftstoff 16a ist aufgrund der zur Normalebene 23 symmetrischen Anordnung optimal auf die Zylindermitte 19 gerichtet. Durch das Drosselorgan 15 kann eine Drosselung des zweiten Einlaßkanales 12 auf einen definierten Mindestdurchfluß erreicht werden. Die Mittellinie des zweiten Einlaßkanales 12 liegt in diesem Fall in der zweiten Ebene 12d, die Winkeldifferenz 12c beträgt also null.

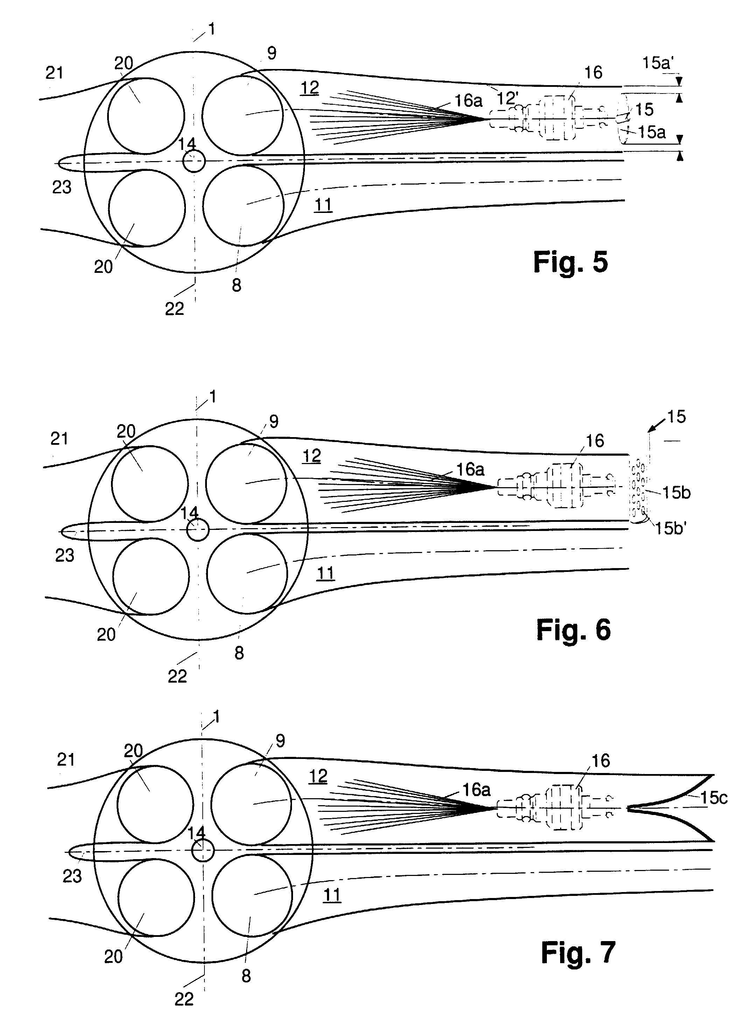

In den Fig. 5, 6 und 7 sind verschiedene Ausführungsbeispiele von Drosselorganen 15 gezeigt. In Fig. 5 ist die Drosseleinrichtung als Drosselklappe 15a mit einem definierten Spalt 15a' zwischen Klappe 15a und Kanalwand 12' im geschlossenen Zustand gezeigt.

Fig. 6 zeigt eine als Flachschieber 15b ausgebildete Drosseleinrichtung 15 mit auf ihrer Fläche gleichmäßig verteilten Durchströmöffnungen 15b'. Anstelle eines Flachschiebers 15b kann auch ein Dreh- oder Walzenschieber eingesetzt werden.

Fig. 7 zeigt eine als Membranventil 15c ausgeführte Drosseleinrichtung 15. Dieses Membranventil 15c verhindert zunächst nach Öffnen des Einlaßventiles 9 das dynamische Rückströmen in den zweiten Einlaßkanal 12 und öffnet erst nach Aufbau einer ausreichenden Druckdifferenz zwischen dem Brennraum 2 und dem in Fig. 7 nicht weiter dargestellten Saugrohr und führt so zu einem zeitlich verzögerten Einströmen des Gemisches. Die Stärke der Verzögerung ist von der Steifigkeit der Membran 15c abhängig.

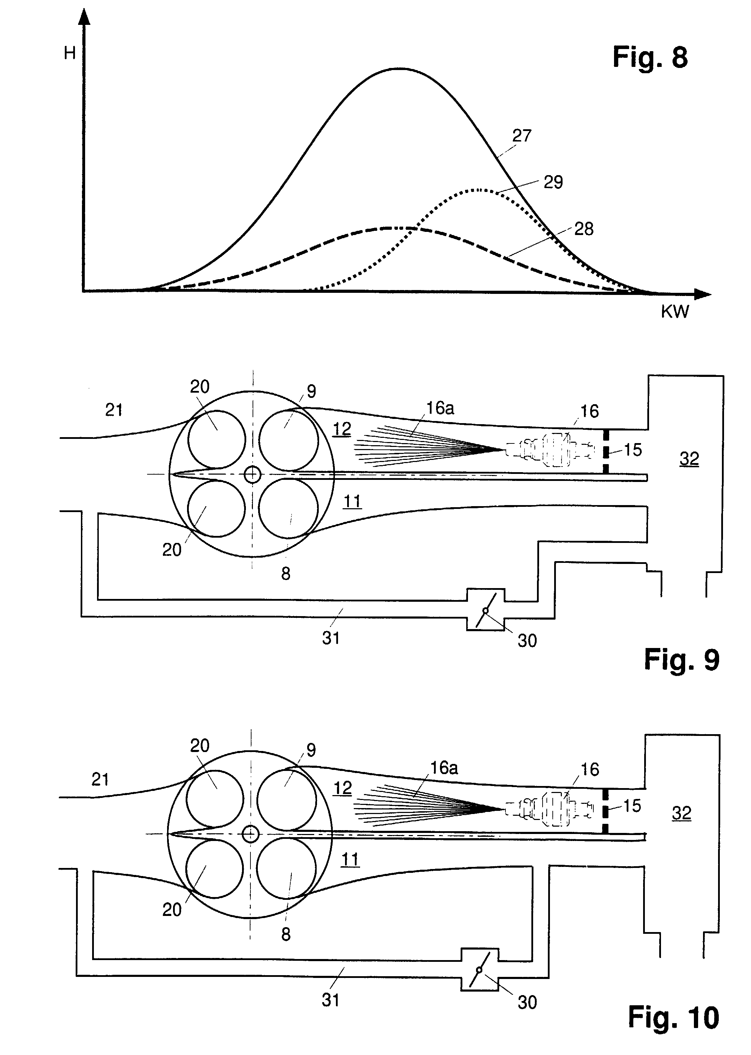

Weiter ist es möglich die Drosseleinrichtung 15 durch eine variable Ventilsteuerung zu realisieren, wie in dem in Fig. 8 ersichtlichen Ventilhub-Kurbelwinkeldiagramm dargestellt ist. Auf der Abszisse ist dabei der Kurbelwinkel KW aufgetragen. Linie 27 steht dabei für den Ausgangsventilhub. Die Reduzierung des Durchflusses erfolgt entweder durch Reduktion des Ventilhubes H auf einen durch die Linie 28 eingezeichneten Ventilhub H oder durch Reduktion von Ventilhub H und Ventilöffnungszeit, wie durch die Kurve 29 eingezeichnet ist.

Die Fig. 9 und 10 zeigen zwei erfindungsgemäße Brennkraftmaschinen mit Abgasrückführung. In Fig. 9 wird das Abgas über eine Regeleinrichtung 30 in einer vom Auslaßsystem 21 ausgehenden Abgasrückführleitung 31 dem Luftsammler 32 zugeführt und gleichmäßig allen Einlaßkanälen 11 und 12 beigemischt. Alternativ dazu kann - wie in Fig. 10 gezeigt ist - das rückgeführte Abgas nur dem kraftstoffventillosen ersten Einlaßkanal 11 zugeführt werden, um eine stärkere Schichtung zu erzielen.

## Patentansprüche

1. Viertakt-Brennkraftmaschine mit dachförmigem Brennraum und mindestens zwei Einlaßventilen pro Zylinder, mit mindestens zwei zu den Einlaßventilen führenden Einlaßkanälen, von welchen ein erster Einlaßkanal ungedrosselt ausgeführt ist und ein zweiter Einlaßkanal eine in Abhängigkeit von der Motorlast betätigbare Drosseleinrichtung aufweist, wobei - in Richtung der Kurbelwellenachse betrachtet - die Mittellinie des ersten Einlaßkanales unmittelbar am Einlaßventil mit einer von der Zylinderachse und der Kurbelwellenachse aufgespannten Längsebene einen größeren Winkel einschließt als eine Mittellinie des zweiten Einlaßkanales, und wobei - in Richtung der Zylinderachse gesehen - am Brennraumeintritt die Mittellinie des ersten Einlaßkanales mit einer die Zylinderachse und die Mitte des Einlaßventils des ersten Einlaßkanales einschließenden ersten Ebene einen größeren Winkel einschließt als eine Mittellinie des zweiten Einlaßkanales mit einer die Zylinderachse und die Mitte eines Einlaßventiles des zweiten Einlaßkanales einschließenden zweiten Ebene, sowie mit einem in einen der Einlaßkanäle mündenden Kraftstoffeinspritzventil und einer zentral im Brennraum angeordneten Zündkerze, **dadurch gekennzeichnet,** daß das Kraftstoffeinspritzventil (16) im drosselbaren zweiten Einlaßkanal (12) angeordnet ist und die Drosseleinrichtung (15) im voll gedrosselten Zustand einen definierten Mindestdurchfluß zwischen etwa 5 % und etwa 20 %, vorzugsweise etwa 10 % des Maximaldurchflusses erzeugt, und daß - in Richtung der Kurbelwellenachse (1) betrachtet - die Mittellinie (11a) des ersten Einlaßkanales (11) im Einlaßventilbereich einen größeren Krümmungsradius (24) aufweist als die Mittelline (12a) des zweiten Einlaßkanales (12).

2. Brennkraftmaschine nach Anspruch 1 mit einer als Drosselklappe ausgebildeten Drosseleinrichtung, **dadurch gekennzeichnet**, daß zur Realisierung des Mindestdurchflusses durch die Drosseleinrichtung (15) im geschlossenen Zustand zwischen Drosselklappe (15a) und Kanalwand (12') ein über den Umfang konstant breiter Ringspalt (15a') mit einer definierten Querschnittsfläche zweichen etwa 5 % bis etwa 20 % des Kanalquerschnittes vorgesehen ist.

3. Brennkraftmaschine nach Anspruch 1, **dadurch gekennzeichnet**, daß die Drosseleinrichtung (15) als Schieber (15b), vorzugsweise als Flachschieber oder Drehschieber, ausgebildet ist, und der Schieber (15b) zumindest eine Öffnung (15b') aufweist.

4. Brennkraftmaschine nach Anspruch 3, **dadurch gekennzeichnet**, daß der Schieber (15b) mehrere, gleichmäßig über die Schieberfläche verteilte Öffnungen (15b') aufweist.

5. Brennkraftmaschine nach Anspruch 1, **dadurch gekennzeichnet**, daß die Drosseleinrichtung (15) durch eine variable Einlaßventilsteuerung gebildet ist, wobei der Mindestdurchfluß durch eine gesteuerte Reduktion des Ventilhubes (H) und/oder Veränderung der Ventilöffnungszeit realisiert ist.

6. Brennkraftmaschine nach Anspruch 1, **dadurch gekennzeichnet,** daß die Drosseleinrichtung (15) als Membranventil (15c) ausgebildet ist.

7. Brennkraftmaschine nach einem der Ansprüche 1 bis 6, **dadurch gekennzeichnet,** daß drei Einlaßventile (8, 9, 10) vorgesehen sind, wobei der zweite Einlaßkanal (12) mit zwei benachbarten Einlaßventilen (9, 10) in Verbindung steht.

8. Brennkraftmaschine nach einem der Ansprüche 1 bis 6, **dadurch gekennzeichnet,** daß drei Einlaßventile (8, 9, 10) und zusätzlich zum ersten und zweiten Einlaßkanal (11, 12) ein dritter Einlaßkanal (13) vorgesehen ist, wobei jeder der - in Richtung der Zylinderachse (7) betrachtet - nebeneinander angeordneten Einlaßkanäle (11, 12, 13) bis zum Einlaßventil (8, 9, 10) getrennt geführt und der zweite Einlaßkanal (12) mittig angeordnet ist, und wobei in dem dritten Einlaßkanal (13) eine Abschalteinrichtung (26) angeordnet ist.

9. Brennkraftmaschine nach einem der Ansprüche 1 bis 8, **dadurch gekennzeichnet**, daß zumindest die kraftstoffventillosen Einlaßkanäle (11, 13) mit einer Abgasrückführleitung (31) verbindbar sind.

## Claims

1. A four-stroke internal combustion engine, having a gabled combustion chamber and at least two inlet valves per cylinder, having at least two inlet conduits leading to the inlet valves, of which a first inlet conduit is embodied unthrottled and a second inlet conduit has a throttle device actuatable as a function of the engine load, wherein - viewed in the direction of the crankshaft axis - the center line of the first inlet conduit directly at the inlet valve forms a larger angle with a longitudinal plane defined by the cylinder axis and the crankshaft axis than does a center line of the second inlet conduit, and wherein - viewed in the direction of the cylinder axis - the center line of the first inlet conduit at the entrance to the combustion chamber forms a larger angle with a first plane enclosing the cylinder axis and the center of the inlet valve of the first inlet conduit, than does a center line of the second inlet conduit forms with a second plane enclosing the cylinder axis and the center of an inlet valve of the second inlet conduit, and having a fuel injection valve discharging into one of the inlet conduits and having a spark plug disposed centrally in the combustion chamber,
characterized in that
the fuel injection valve (16) is disposed in the throttleable second inlet conduit (12), and the throttle device (15) in the fully throttled state produces a defined minimum flow rate of between about 5% and about 20%, preferably about 10%, of the maximum flow rate, and that - viewed in the direction of the crankshaft axis (1) - the center line (11a) of the first inlet conduit (11) in the inlet valve region has a greater radius of curvature (24) than does the center line (12a) of the second inlet conduit (12).

2. The engine of claim 1, having a throttle device embodied as a throttle valve,
characterized in that
to achieve the minimum flow rate through the throttle device (15) in the closed state, an annular gap (15a') of constant width over the circumference and with a defined cross-sectional area of between about 5% to about 20% of the conduit cross section is provided between the throttle valve (15a) and the conduit wall (12').

3. The engine of claim 1,
characterized in that
the throttle device (15) is embodied as a slide (15b), preferably a flat slide or rotary slide, and the slide (15b) has at least one opening (15b').

4. The engine of claim 3,
characterized in that
the slide (15b) has a plurality of openings (15b'), distributed uniformly over the surface of the slide.

5. The engine of claim 1,
characterized in that
the throttle device (15) is embodied by a variable inlet valve controller, and the minimum flow rate is realized by means of a controlled reduction of the valve stroke (H) and/or a variation in the valve opening time.

6. The engine of claim 1,
characterized in that
the throttle device (16) is embodied as a diaphragm valve (15c).

7. The engine of one of claims 1-6,
characterized in that
three inlet valves (8, 9, 10) are provided, and the second inlet conduit (12) communicates with two adjacent inlet valves (9, 10).

8. The engine of one of claims 1-6,
characterized in that
three inlet valves (8, 9, 10) and, in addition to the first and second inlet conduits (11, 12), a third inlet conduit (13) are provided, and each of the inlet conduits (11, 12, 13) disposed side by side - as viewed in the direction of the cylinder axis (7) - is embodied separately as far as the inlet valve (8, 9, 10), and the second inlet conduit (12) is disposed centrally, and a turnoff device (26) is disposed in the third inlet conduit (13).

9. The engine of one of claims 1-8,
characterized in that
at least the fuel-valveless inlet conduits (11, 13) can be made to communicate with an exhaust gas recirculation line (31).

## Revendications

1. Moteur à combustion interne à quatre temps comportant une chambre de combustion en forme de dôme avec au moins deux soupapes d'admission par cylindre, au moins deux canaux d'admission aboutissant aux soupapes d'admission et dont un premier canal d'admission est sans étranglement et le second canal d'admission comporte une installation d'étranglement actionnée en fonction de la charge du moteur, et
- en direction de l'axe du vilebrequin, la ligne d'axe du premier canal d'admission, directement au niveau de la soupape d'admission, forme, avec un plan longitudinal passant par l'axe du cylindre et l'axe du vilebrequin, un angle plus grand que celui de l'axe du second canal d'admission, et
- (vu dans la direction de l'axe du cylindre), à l'entrée de la chambre de combustion, l'axe du premier canal d'admission forme, avec un premier plan passant par l'axe du cylindre et le milieu de la soupape d'admission du premier canal d'admission, un angle plus grand que celui formé par l'axe du second canal d'admission avec un second plan passant par l'axe du cylindre et le milieu d'une soupape d'admission du second canal d'admission, ainsi qu'un injecteur de carburant débouchant dans l'un des canaux d'admission et une bougie d'allumage au centre de la chambre de combustion,
caractérisé en ce que
l'injecteur (16) se trouve dans le second canal d'admission (12), étranglé, et
l'installation d'étranglement (15), à l'état complètement étranglé, donne un débit minimum déterminé compris entre environ 5 % et environ 20 %, et de préférence environ 10 % du débit maximum, et
(vu dans la direction de l'axe de vilebrequin (1)), l'axe (11a) du premier canal d'admission (11) présente, dans la zone de la soupape d'admission, un rayon de courbure (24) plus grand que l'axe (12a) du second canal d'admission (12).

2. Moteur à combustion interne selon la revendication 1, comportant une installation d'étranglement en forme de papillon d'étranglement,
caractérisé en ce que
pour réaliser le débit minimum par l'installation d'étranglement (15) à l'état fermé, entre le papillon d'étranglement (15a) et la paroi du canal (12'), il est prévu un intervalle annulaire (15a'), constant dans la périphérie, plus large, avec une section déterminée comprise entre environ 5 % et environ 20 % de la section du canal.

3. Moteur à combustion interne selon la revendication 1,
caractérisé en ce que
l'installation d'étranglement (15) est en forme de tiroir (15b), de préférence sous la forme d'un tiroir plat ou d'un tiroir rotatif, et le tiroir (15b) possède au moins une ouverture (15b').

4. Moteur à combustion interne selon la revendication 3,
caractérisé en ce que
le tiroir (15b) comporte plusieurs ouvertures (15b') réparties régulièrement sur la surface du tiroir.

5. Moteur à combustion interne selon la revendication 3,
caractérisé en ce que
l'installation d'étranglement (15) est formée par une commande de soupape d'admission variable, le débit minimum étant réalisé par une réduction commandée de la course de soupape (H) et/ou une variation de la durée d'ouverture de la soupape.

6. Moteur à combustion interne selon la revendication 1,
caractérisé en ce que
l'installation d'étranglement (15) est une soupape à membrane ((15c).

7. Moteur à combustion interne selon l'une des revendications 1 à 6,
caractérisé par
trois soupapes d'admission (8, 9, 10), le second canal d'admission (12) communiquant avec deux soupapes d'admission voisines (9, 10).

8. Moteur à combustion interne selon l'une des revendications 1 à 6,
caractérisé par
trois soupapes d'admission (8, 9, 10) et en plus du premier et du second canal d'admission (11, 12), un troisième canal d'admission (13), chacun des canaux d'admission (11, 12, 13), juxtaposés (dans la direction de l'axe du cylindre 7), étant conduit d'une manière séparée jusqu'à la soupape d'admission (8, 9, 10) et le second canal d'admission (12) se trouvant au milieu, et une installation de coupure (26) est prévue dans le troisième canal d'admission (13).

9. Moteur à combustion interne selon l'une des revendications 1 à 8,
caractérisé en ce qu'
au moins les canaux d'admission (11, 13), sans injecteur de carburant, sont reliés à une conduite de réinjection de gaz d'échappement (31).
